# EUROPEAN PATENT APPLICATION

(11) **EP 4 369 850 A1**
(43) Date of publication of application: **15.05.2024**
(21) Application number: 22836768.6
(22) Date of filing: 28.06.2022
(51) Int. Cl.: H04W 76/28, H04W 52/02, H04W 28/24

(54) **UNICAST SIDELINK COMMUNICATION METHOD APPARATUS, AND TERMINAL**

(30) Priority: 05.07.2021 CN 202110758734
(71) Applicant: Vivo Mobile Communication Co., Ltd., Dongguan, Guangdong 523863 (CN)
(72) Inventor: ZHENG, Qian, Dongguan, Guangdong 523863 (CN); WU, Jianming, Dongguan, Guangdong 523863 (CN)
(74) Representative: Lavoix
(86) International application number: PCT/CN2022/101868
(87) International publication number: WO 2023/280014

(57) **Abstract**

This application discloses a unicast sidelink communication method and apparatus, and a terminal. The unicast sidelink communication method in embodiments of this application includes: establishing, by a receive end configured with a discontinuous reception DRX mode, a unicast sidelink with a transmit end within unicast establishment active time; and after the unicast sidelink establishment is completed, receiving, by the receive end, a unicast service data packet by using target configuration information, where the target configuration information includes parameter configuration information of second DRX, and the parameter configuration information of the second DRX is indicated by a quality of service QoS configuration of a unicast service; and the unicast establishment active time includes one of the following: an on-duration corresponding to first DRX; and the on-duration corresponding to the first DRX and extension time after the on-duration corresponding to the first DRX.

## Description

### CROSS-REFERENCE TO RELATED APPLICATIONS

This application claims priority to Chinese Patent Application No. 202110758734.6, filed in China on July 5, 2021, which is incorporated herein by reference in its entirety.

### TECHNICAL FIELD

This application pertains to the field of communications, and in particular, relates to a unicast sidelink communication method and apparatus, and a terminal.

### BACKGROUND

New radio (New Radio, NR) sidelink (Sidelink, SL, also referred to as a direct link, a direct communication link, a secondary link, or the like) unicast direct communication interface (PC5) discontinuous reception (Discontinuous Reception, DRX) parameters may be configured through information exchange between user equipment (User Equipment, UE, also referred to as a terminal) at an access stratum (Access Stratum, AS) by using quality of service (Quality of Service, QoS) profiles (Profile) required by different services. To be specific, a receive terminal (receive UE or peer UE, Rx UE, also referred to as a receive end) sends assistance information (Assistance Information) to a transmit terminal (transmit UE, Tx UE, also referred to as a transmit end), and the Tx UE finally determines unicast PC5 DRX based on information of the Rx UE and QoS required by a service of the Tx UE.

Generally, the Tx UE may configure specific (Specific) PC5 DRX parameters by using a required QoS profile or a PC5 QoS ID (PQI). A vehicle to everything (vehicle to everything, V2X) layer provides the information to the AS. The AS negotiates through information exchange between unicast UEs. The Tx UE determines a final PC5 DRX configuration by considering the assistance information (Assistance Information) provided by the Rx UE and referring to QoS profile information required by the service. Therefore, at the AS, the Tx UE can effectively configure the PC5 DRX parameters based on service properties or features of the Tx UE and referring to the assistance information provided by the Rx UE.

However, at an initial stage of the service, that is, before a unicast sidelink is established between the unicast UEs, the unicast Rx UE cannot obtain QoS profile information of the Tx UE. Therefore, the Rx UE can only implement a PC5 DRX operation by using preconfigured QoS profile information. Consequently, in this manner, unicast sidelink establishment is time-consuming, and configuration efficiency is low. This greatly reduces an energy saving effect of the UE.

### SUMMARY

Embodiments of this application provide a unicast sidelink communication method and apparatus, and a terminal, to resolve a problem of a low information configuration success rate and efficiency caused by a unicast link establishment process in a conventional manner.

According to a first aspect, a unicast sidelink communication method is provided and includes:
establishing, by a receive end configured with a discontinuous reception DRX mode, a unicast sidelink with a transmit end within unicast establishment active time; and
after the unicast sidelink establishment is completed, receiving, by the receive end, a unicast service data packet by using target configuration information, where
the target configuration information includes parameter configuration information of second DRX, and the parameter configuration information of the second DRX is indicated by a quality of service QoS configuration of a unicast service; and
the unicast establishment active time includes one of the following:
   an on-duration corresponding to first DRX; and
   the on-duration corresponding to the first DRX and extension time after the on-duration corresponding to the first DRX.

According to a second aspect, a unicast sidelink communication apparatus is provided and applied to a receive end configured with a discontinuous reception DRX mode and includes:
a first establishment module, configured to establish a unicast sidelink with a transmit end within unicast establishment active time; and
a receiving module, configured to receive a unicast service data packet by using target configuration information after the unicast sidelink establishment is completed, where
the target configuration information includes parameter configuration information of second DRX, and the parameter configuration information of the second DRX is indicated by a quality of service QoS configuration of a unicast service; and
the unicast establishment active time includes one of the following:
   an on-duration corresponding to first DRX; and
   the on-duration corresponding to the first DRX and extension time after the on-duration corresponding to the first DRX.

According to a third aspect, a unicast sidelink communication method is provided and includes:
establishing, by a transmit end within unicast establishment active time, a unicast sidelink with a receive end configured with a discontinuous reception DRX mode; and
after the unicast sidelink establishment is completed, sending, by the transmit end, a unicast service data packet by using target configuration information, where
the target configuration information includes parameter configuration information of second DRX, and the parameter configuration information of the second DRX is indicated by a quality of service QoS configuration of a unicast service; and
the unicast establishment active time includes one of the following:
   an on-duration corresponding to first DRX; and
   the on-duration corresponding to the first DRX and extension time after the on-duration corresponding to the first DRX.

According to a fourth aspect, a unicast sidelink communication apparatus is provided and applied to a transmit end and includes:
a second establishment module, configured to establish, within unicast establishment active time, a unicast sidelink with a receive end configured with a discontinuous reception DRX mode; and
a first sending module, configured to send a unicast service data packet by using target configuration information after the unicast sidelink establishment is completed, where
the target configuration information includes parameter configuration information of second DRX, and the parameter configuration information of the second DRX is indicated by a quality of service QoS configuration of a unicast service; and the unicast establishment active time includes one of the following:
   an on-duration corresponding to first DRX; and
   the on-duration corresponding to the first DRX and extension time after the on-duration corresponding to the first DRX.

According to a fifth aspect, a terminal is provided. The terminal is a receive end configured with a discontinuous reception DRX mode. The terminal includes a processor, a memory, and a program or instructions stored in the memory and capable of running on the processor. When the program or instructions are executed by the processor, the steps of the method according to the first aspect are implemented.

According to a sixth aspect, a terminal is provided. The terminal is a receive end configured with a discontinuous reception DRX mode. The terminal includes a processor and a communication interface. The processor is configured to establish a unicast sidelink with a transmit end within unicast establishment active time; and the communication interface is configured to receive a unicast service data packet by using target configuration information after the unicast sidelink establishment is completed, where
the target configuration information includes parameter configuration information of second DRX, and the parameter configuration information of the second DRX is indicated by a quality of service QoS configuration of a unicast service; and
the unicast establishment active time includes one of the following:
   an on-duration corresponding to first DRX; and
   the on-duration corresponding to the first DRX and extension time after the on-duration corresponding to the first DRX.

According to a seventh aspect, a terminal is provided. The terminal is a transmit end. The terminal includes a processor, a memory, and a program or instructions stored in the memory and capable of running on the processor. When the program or instructions are executed by the processor, the steps of the method according to the third aspect are implemented.

According to an eighth aspect, a terminal is provided. The terminal is a transmit end. The terminal includes a processor and a communication interface. The processor is configured to establish, within unicast establishment active time, a unicast sidelink with a receive end configured with a discontinuous reception DRX mode; and the communication interface is configured to send a unicast service data packet by using target configuration information after the unicast sidelink establishment is completed, where
the target configuration information includes parameter configuration information of second DRX, and the parameter configuration information of the second DRX is indicated by a quality of service QoS configuration of a unicast service; and
the unicast establishment active time includes one of the following:
   an on-duration corresponding to first DRX; and
   the on-duration corresponding to the first DRX and extension time after the on-duration corresponding to the first DRX.

According to a ninth aspect, a readable storage medium is provided. The readable storage medium stores a program or instructions. When the program or instructions are executed by a processor, the steps of the method according to the first aspect are implemented, or the steps of the method according to the third aspect are implemented.

According to a tenth aspect, a chip is provided. The chip includes a processor and a communication interface. The communication interface is coupled to the processor. The processor is configured to run a program or instructions to implement the steps of the method according to the first aspect or the third aspect.

According to an eleventh aspect, a computer program or program product is provided. The computer program or program product is stored in a non-volatile storage medium. The program or program product is executed by at least one processor to implement the steps of the method according to the first aspect or the third aspect.

According to a twelfth aspect, a communication device is provided, and configured to perform the steps of the method according to the first aspect or perform the steps of the method according to the third aspect.

In the embodiments of this application, by using the preconfigured on-duration corresponding to the first DRX used before the unicast link is established or the on-duration corresponding to the first DRX and the extension time after the on-duration corresponding to the first DRX, the receive end establishes the unicast link with the transmit end, thereby improving link establishment efficiency and further reducing terminal power consumption.

### BRIEF DESCRIPTION OF DRAWINGS

FIG. 1 is a schematic flowchart of a unicast sidelink communication method applied to a receive end according to an embodiment of this application;
FIG. 2 is a first schematic usage status diagram of a time offset (Time Offset) timer, an initial time offset (Initial Time Offset, ITO) timer, and a secondary time offset (Secondary Time Offset, STO) timer;
FIG. 3 is a second schematic usage status diagram of a time offset timer, an ITO timer, and an STO timer;
FIG. 4 is a schematic diagram of a unicast sidelink establishment process;
FIG. 5 is a schematic status diagram of specific PC5 DRX, default (Default) PC5 DRX, a time offset timer, an ITO timer, and an STO timer;
FIG. 6 is a first schematic usage status diagram of a time offset timer and an STO timer;
FIG. 7 is a schematic diagram of a usage process of a data packet reception timer;
FIG. 8 is a first schematic modular diagram of a unicast sidelink communication apparatus according to an embodiment of this application;
FIG. 9 is a structural block diagram of a terminal according to an embodiment of this application;
FIG. 10 is a schematic flowchart of a unicast sidelink communication method applied to a transmit end according to an embodiment of this application;
FIG. 11 is a second schematic modular diagram of a unicast sidelink communication apparatus according to an embodiment of this application; and
FIG. 12 is a structural block diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other systems than the NR system, for example, a 6th Generation (6th Generation, 6G) communication system.

A unicast sidelink communication method and apparatus, and a terminal provided in embodiments of this application are hereinafter described in detail by using some embodiments and application scenarios thereof with reference to the accompanying drawings.

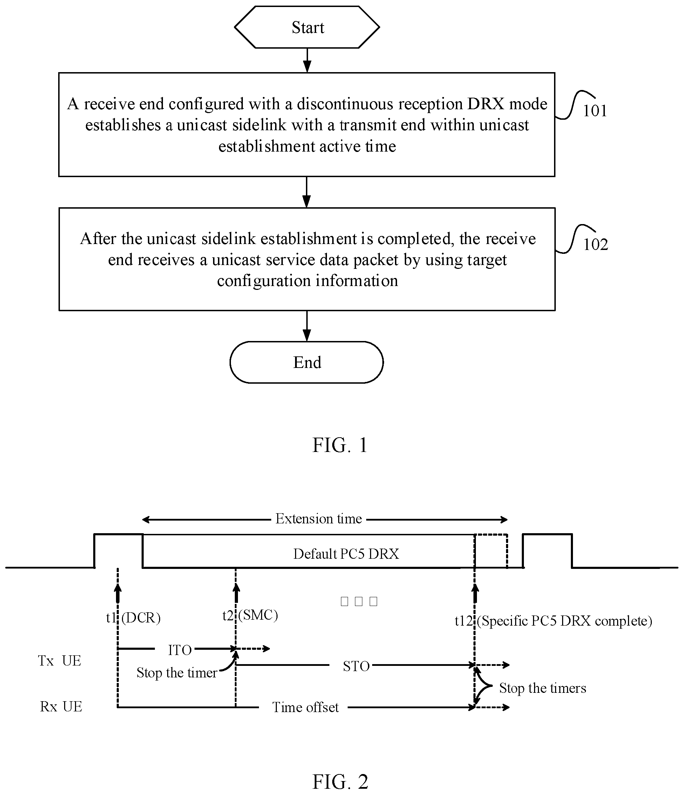

As shown in FIG. 1, an embodiment of this application provides a unicast sidelink communication method, including the following steps.

Step 101: A receive end configured with a discontinuous reception DRX mode establishes a unicast sidelink with a transmit end within unicast establishment active time (Unicast Establishment Active Time).

It should be noted herein that when a service is performed between terminals, a party that sends a service data packet is referred to as a transmit terminal (Tx UE, also referred to as a transmit end), and a party that receives the service data packet is referred to as a receive terminal (Rx UE, also referred to as a receive end).

It should be noted that the unicast establishment active time includes one of the following:

A11. An on-duration corresponding to first DRX.

It should be noted that each DRX cycle includes an on-duration (on-Duration) and an off-duration (Off-Duration). Within the on-duration, the transmit end can send data and the receive end can receive data, but no data is received or sent within the off-duration. In this case, the receive end and the transmit end communicate within the on-duration to achieve establishment of the unicast sidelink.

A12. The on-duration corresponding to the first DRX and extension time after the on-duration corresponding to the first DRX.

It should be noted that the extension time mentioned in this case refers to an additional period of time within which the Tx UE and the Rx UE can communicate after the on-duration. It is similar to the on-duration and may also be referred to as a time offset (Time Offset).

Step 102: After the unicast sidelink establishment is completed, the receive end receives a unicast service data packet by using target configuration information.

The target configuration information includes parameter configuration information of second DRX, and the parameter configuration information of the second DRX is indicated by a QoS configuration of a unicast service.

It should be noted that the QoS configuration mentioned in this embodiment of this application may be a QoS profile.

In step 102, after the unicast sidelink establishment is completed, the receive end uses an on-duration of the second DRX as a DRX active time to receive the service. Optionally, the target configuration information may further include parameter configuration information of the first DRX. To be specific, in this case, the receive end combines the on-duration of the first DRX and the on-duration of the second DRX into the DRX active time to receive the service.

First, it should be noted that PC5 DRX mainly includes default PC5 DRX (Default PC5 DRX) and specific PC5 DRX (Specific PC5 DRX). Certainly, there are other types of DRX. In this embodiment of this application, the first DRX may be the default PC5 DRX, and the second DRX may be the specific PC5 DRX. Certainly, the first DRX may alternatively be sidelink DRX (SL DRX), specific PC5 DRX, or other types of DRX, and the second DRX may alternatively be default PC5 DRX, SL DRX, or other types of DRX, as long as the first DRX and the second DRX are not the same type of DRX.

This embodiment of this application is described by using an example in which the first DRX is the default PC5 DRX and the second DRX is the specific PC5 DRX.

The following describes the unicast establishment process within different unicast establishment active times.
1. The unicast establishment active time includes the on-duration corresponding to the first DRX and the extension time after the on-duration corresponding to the first DRX.

Specifically, in this case, an optional implementation of step 101 is:
in the unicast sidelink establishment process, transmitting, by the receive end with the transmit end, first target information within a first on-duration corresponding to the first DRX, and second target information within the extension time after the first on-duration, where
the first target information includes at least a direct communication request (Direct Communication Request, DCR) in sidelink direct communication interface signaling (PC5-S), and the second target information includes information other than the first target information in the PC5-S and sidelink direct communication interface radio resource control (PC5-Radio Resource Control, PC5-RRC) information.

Similar to an SL inactivity timer, in this implementation, an active time (Active Time) may be extended based on DCR transmission and reception and used for unicast sidelink establishment.

It should be noted that the PC5-S mainly includes the DCR, security mode complete (Security Mode Complete, SMC), and direct communication acknowledgement (Direct Communication Acknowledgement, DCA).

In this implementation, at least the DCR is transmitted within an on-duration associated with the default PC5 DRX. After the on-duration associated with the default PC5 DRX, a time offset (Time Offset) or an extension time (Extension Time) may be used to complete transmission other than the DCR.

Optionally, a length of the extension time satisfies one of the following:

A21. The length of the extension time is a preset value.

In this case, the length of the extension time is a configured or preconfigured fixed value.

It should be noted that, in this case, the first on-duration is at least one on-duration corresponding to the first DRX. For example, if the extension time is set to be long enough, the first on-duration may correspond to only one on-duration of the default PC5 DRX; or if the extension time is set to be short, and a PC5 sidelink establishment time is not enough, a plurality of default PC5 DRX on-durations need to be used between unicast UEs to complete PC5 unicast sidelink establishment. In other words, in this case, the first on-duration needs to correspond to a plurality of on-durations of the default PC5 DRX.

This extension time setting is simple to implement and can achieve a purpose of reducing terminal power consumption.

A22. The length of the extension time is determined based on a channel condition.

In this case, the length of the extension time is adaptive, that is, it changes with quality of the channel condition. The channel condition may include a channel occupancy ratio (Channel occupancy Ratio, CR), a channel busy ratio (Channel Busy Ratio, CBR), a signal-to-noise ratio (Signal-to-Noise Ratio, SNR), or the like.

It should be noted that the extension time may be extended until the unicast sidelink establishment is completed. In other words, an adaptive length of the extension time may be determined based on an actual situation. The adaptive length extension of the extension time may be stopped after the Tx UE receives sidelink radio resource configuration complete (RRCReconfigurationCompleteSidelink) information, but is stopped after the Rx UE sends the RRCReconfigurationCompleteSidelink.

It should be noted that, in this case, the first on-duration is the on-duration corresponding to the first DRX (that is, the default PC5 DRX), and the extension time is within the off-duration. Normally, the off-duration of the first DRX is long, and the length of the extension time is less than the length of the off-duration. In other words, in this case, the unicast sidelink establishment can be completed within one cycle of the first DRX, and the unicast sidelink establishment can be completed quickly. This improves sidelink establishment efficiency and can further achieve the purpose of reducing terminal power consumption.

It should be further noted that, in this embodiment of this application, the receive end uses an extension time timer for timing of the extension time, and in cooperation with the receive end, the transmit end also uses a corresponding timer to align the extension time. Optionally, a specific implementation of the transmitting, by the receive end with the transmit end, first target information within a first on-duration corresponding to the first DRX, and second target information within the extension time after the first on-duration is:
in a case that a first condition is satisfied, the receive end starts an extension time timer.

The first condition includes at least one of the following:

A31. A DCR sent by the transmit end has been received.

It should be noted that, in this case, the transmit end starts a corresponding timer after sending the DCR.

A32. SMC signaling has been sent to the transmit end.

It should be noted that, in this case, the transmit end starts a corresponding timer after receiving the SMC signaling.

A33. SMC-acknowledgement (Acknowledgement, ACK) signaling fed back by the transmit end has been received.

It should be noted that, in this case, the transmit end starts a corresponding timer after sending the SMC-ACK signaling.

It should be further noted that, after sending the sidelink radio resource configuration complete information, the receive end stops the extension time timer, and the transmit end also stops the corresponding timer.

The following describes in detail a manner of aligning the extension time between the receive end and the transmit end.

For the transmit end, the transmit end divides timing of the extension time into two stages, that is, using an initial time offset (Initial Time Offset, ITO) timer and a secondary time offset (Secondary Time Offset, STO) timer. In this embodiment of this application, the STO timer is also referred to as a first timer. However, the receive end uses only one extension time timer, which may be referred to as a time offset timer.

### Implementation 1

As shown in FIG. 2, for the Tx UE, at a time t1, after the Tx UE sends the DCR to the Rx UE, the Tx UE immediately starts the initial time offset timer, and after the Rx UE receives the DCR sent by the Tx UE, the Rx UE immediately starts the time offset timer; and at a time t2, after the Tx UE receives the SMC sent by the Rx UE, the Tx UE stops the initial time offset timer, and then immediately starts the secondary time offset timer.

It should be noted herein that, during running of the initial time offset timer, the Tx UE does not send any DCR.

A reason why the Tx UE divides timing of the time offset into two stages is to ensure that the secondary time offset timer of the Tx UE and the time offset timer of the Rx UE are started at the same time, and to align the extended active time (Active Time) of receiving and sending.

Specifically, the DCR uses a sidelink signaling radio bearer with unprotected PC5-S, that is, (SL-Signaling Radio Bearer, SL-SRB) 0 (using a (Transparent Mode Radio Link Control, TM RLC) mode without a signaling feedback acknowledgement mechanism). There is a relatively high possibility that the Rx UE fails to decode the DCR. If the Rx UE fails to decode the DCR, the Rx UE cannot start the time offset timer, and the Tx UE starts only the initial time offset timer to receive the SMC, that is, an SL-SRB 1 (using an (Acknowledged Mode, AM RLC) mode with a signaling feedback acknowledgement mechanism) is used. Because the SL-SRB 1 has a signaling feedback acknowledgement mechanism, there is a very low possibility that the Tx UE fails to decode the SMC. After the initial time offset timer expires, if the Tx UE does not receive the SMC (generally, in this case, the Rx UE fails to decode the DCR), the Tx UE waits for a next default PC5 DRX on-duration occasion to send the DCR again. In addition, the Tx UE stops the initial time offset timer and starts the secondary time offset timer only when the Tx UE receives the SMC.

It should be noted that a sum of an actual running time of the ITO timer and an actual running time of the STO timer is equal to an actual running time of the time offset timer, that is, Length of the ITO timer + Length of the STO timer = Length of the time offset timer, that is, the length of the extension time is equal to a sum of a length of the initial time offset timer and a length of the first timer.

### Implementation 2

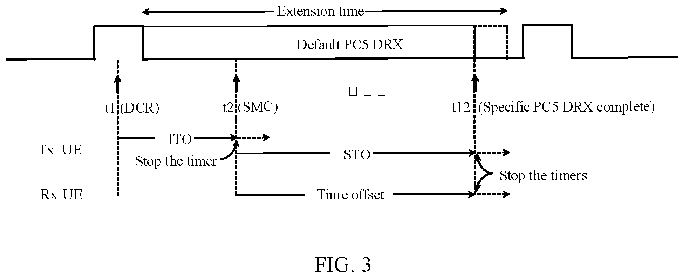

As shown in FIG. 3, after the Rx UE receives the DCR sent by the Tx UE and successfully decodes the DCR, the Rx UE does not start the time offset timer. After sending the SMC, the Rx UE starts the time offset timer. After the Tx UE receives the SMC, the Tx UE stops the initial time offset timer and then starts the secondary time offset timer. In this case, an actual running time of the STO timer of the Tx UE is equal to an actual running time of the time offset timer of the Rx UE, that is, Length of the STO timer = Length of the time offset timer.

The Rx UE can achieve a more energy saving effect by using this method to start the time offset timer, because the Tx UE does not send the DCR to the Rx UE during running of the ITO timer.

It should be noted that, if the initial time offset timer expires within the on-duration of the default PC5 DRX, the Tx UE does not need to wait for a next on-duration of the default PC5 DRX. The Tx UE can immediately send the DCR to the Rx UE after the initial time offset timer expires. However, in this case, the configured length of the on-duration of the default PC5 DRX is generally long, which has great impact on the energy saving effect of the UE.

### Implementation 3

After the Rx UE receives the DCR sent by the Tx UE and successfully decodes the DCR, the Rx UE does not start the time offset timer. The Rx UE starts the time offset timer only after sending the SMC and receiving the SMC-ACK signaling fed back by the transmit end. After the Tx UE sends the SMC-ACK, the Tx UE stops the initial time offset timer and then starts the secondary time offset timer. In this case, an actual running time of the STO timer of the Tx UE is equal to an actual running time of the time offset timer of the Rx UE, that is, Length of the STO timer = Length of the time offset timer.

The Rx UE can achieve a more energy saving effect by using this method to start the time offset timer, because the Tx UE does not send the DCR to the Rx UE during running of the ITO timer.

### Implementation 4

It should be noted that, in this case, the initial time offset timer may be started within a first time unit after the end of the on-duration of the default PC5 DRX (for example, the time unit may be a slot or a sub-slot).

It should be noted that, if this method is used, starting of the initial time offset timer depends on whether the Tx UE receives the SMC from the Rx UE within the on-duration. If the Tx UE does not receive the SMC within the on-duration, the Tx UE starts the initial time offset timer in a first slot after the on-duration ends. If the Tx UE receives the SMC within the on-duration, the Tx UE and the Rx UE start the secondary time offset timer and the time offset timer respectively at the same time. In this case, the Tx UE does not need to start the initial time offset timer.

2. The unicast establishment active time includes the on-duration corresponding to the first DRX.

Specifically, in this case, an optional implementation of step 101 is:
in the unicast sidelink establishment process, transmitting, by the receive end with the transmit end, PC5-S and PC5-RRC information within at least one on-duration corresponding to the first DRX.

It should be noted that, in this case, before a specific PC5 DRX configuration is completed, all PC5-S (including the DCR, SMC, and DCA) and PC5-RRC information are transmitted within an on-duration (On-duration) associated with the default PC5 DRX. This manner not only can achieve a terminal energy saving effect but also has characteristics of simple implementation.

The Tx UE needs to initiate the unicast service, but the Tx UE also needs to stop the unicast service. To stop the unicast service, the following manner is used in this embodiment of this application:
in a case that a second condition is satisfied, stopping receiving unicast service data packets.

The second condition includes at least one of the following:

B 11. The receive end receives first indication information sent by the transmit end, where
the first indication information is used to indicate the receive end to stop using the second DRX.

Optionally, that the receive end receives first indication information sent by the transmit end includes one of the following:

B111. The receive end receives the first indication information sent by the transmit end by using higher layer signaling.

It should be noted that, in this case, higher layer signaling is used to send the first indication information. A specific implementation process of this case is: once an application layer of the Tx UE stops the unicast service, the Tx UE indicates, by using the higher layer signaling, the Rx UE to stop using the specific PC5 DRX. In this case, the Rx UE stops the specific PC5 DRX, but the default PC5 DRX continues to run.

B 112. The receive end receives the first indication information sent by the transmit end by using media access control control element (Media Access Control-Control Element, MAC-CE) signaling.

It should be noted that, in this case, the MAC-CE signaling is used to send the first indication information. A specific implementation process of this case is: once an application layer of the Tx UE stops the unicast service, the Tx UE indicates, by using the MAC-CE signaling of the PC5 DRX, the Rx UE to stop using the specific PC5 DRX. In this case, the Rx UE stops the specific PC5 DRX, but the default PC5 DRX continues to run.

B 12. A first timer expires.

It should be noted that, in a case that the receive end receives a new data packet, the first timer is started (if the first timer has not been started, the first timer is started when the receive end receives a new data packet) or restarted (if the first timer has been started, the first timer needs to be restarted (restarted) when the receive end receives a new data packet).

The first timer in this embodiment of this application is a data packet reception timer. In this case, the receive end uses the data packet reception timer to stop using the specific PC5 DRX configuration. A specific method is: if the Rx UE receives a new data packet from the Tx UE, the Rx UE (re)starts the data packet reception timer. More precisely, once the Rx UE receives a new packet from the Tx UE, the packet reception timer is (re)started in a first slot after a PC5 DRX active time. If the data packet reception timer expires, it indicates that the application layer has no data packet to send for the unicast service. In this case, the Rx UE stops using the specific PC5 DRX, but the default PC5 DRX continues to run. An advantage of this solution is that as long as the Tx UE stops sending new data packets, the Rx UE stops using the specific PC5 DRX configuration. Therefore, this method can ensure the energy saving effect of the Rx UE.

It should be further noted that this method can resolve a problem of a radio link failure (Radio Link Failure, RLF). Specifically, because the data packet reception timer is started at both the transmit end and the receive end all the time, if the RLF occurs, the Rx UE cannot receive the data packet. When the data packet reception timer expires, the Rx UE considers that a unicast sidelink failure occurs, and the Rx UE stops using the specific PC5 DRX. If the Tx UE cannot receive a feedback about the data packet after sending the data packet, the Tx UE also stops using the specific PC5 DRX. Therefore, if the RLF occurs, the Tx UE and the Rx UE restore a unicast sidelink connection by using the default PC5 DRX.

It should be further noted that, in a case that the parameter configuration information of the second DRX is indicated by one QoS configuration, the parameter configuration information of the second DRX is determined by a packet delay budget (Packet Delay Budget, PDB); or in a case that the parameter configuration information of the second DRX is indicated by at least two QoS configurations, the parameter configuration information of the second DRX is determined by a preset PDB in the at least two QoS configurations. Optionally, the preset PDB is a smallest PDB in the at least two QoS configurations.

In other words, the parameter configuration of the specific PC5 DRX mainly depends on one QoS configuration or a combination of a plurality of QoS configurations. When the parameter configuration of the specific PC5 DRX depends on one QoS configuration, the parameter configuration of the specific PC5 DRX is determined based on a size of the PDB. When the parameter configuration of the specific PC5 DRX depends on a plurality of QoS configurations, the parameter configuration of the specific PC5 DRX is determined based on a size of the smallest PDB in the QoS configurations.

The following describes several application scenarios of this application by using examples.

### Specific application scenario 1

In the unicast sidelink establishment process, the unicast sidelink may be established according to the method described in A11 or A12. When A12 is used, at least the DCR is transmitted within the on-duration associated with the default PC5 DRX. After the on-duration associated with the default PC5 DRX, a time offset (Time Offset) or an extension time (Extension Time) may be used to complete transmission other than the DCR.

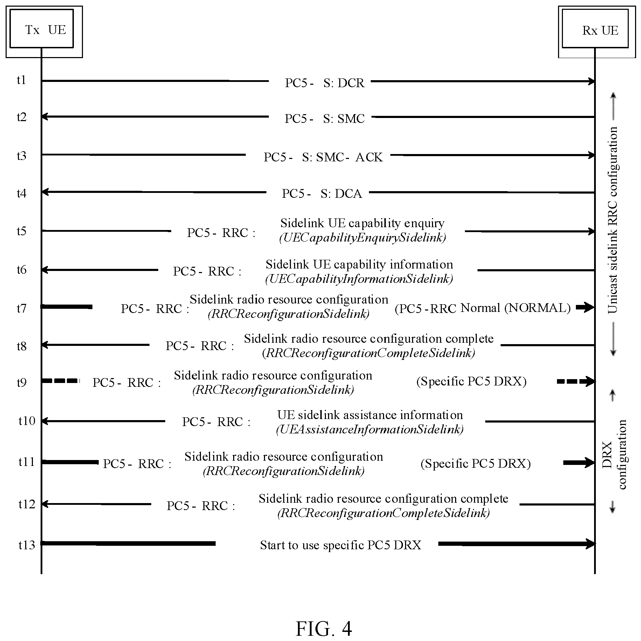

Once the application layer of the Tx UE starts the service, the Tx UE first needs to establish the unicast sidelink. As shown in FIG. 4, in the unicast sidelink establishment process, the Tx UE sends the DCR to the Rx UE at the time t1. At the time t2, a PC5-S secure channel is established. At a time t8, the Tx UE completes a PC5-RRC normal (NORMAL) parameter configuration. Finally, at a time t12, the Tx UE completes the parameter configuration of the specific PC5 DRX. The entire unicast sidelink establishment process is completed through the on-duration and time offset of the default PC5 DRX.

It should be noted that, at a time t9, before the Tx UE receives assistance information sent by the Rx UE, the Tx UE may selectively configure parameters of the specific PC5 DRX for the Rx UE. If the Rx UE does not accept the parameter configuration of the specific PC5 DRX of the Tx UE, the Rx UE may send assistance information to request the Tx UE to reconfigure the parameters of the specific PC5 DRX for the Rx UE.

Optionally, before the Rx UE receives the parameters of the specific PC5 DRX that are sent by the Tx UE, the Rx UE may first send the assistance information at a time t10. The Tx UE may configure the parameters of the specific PC5 DRX for the Rx UE at a time t11 based on the received assistance information while considering QoS requirements of the service.

Based on characteristics of the service (that is, QoS requirements), a V2X layer of the Tx UE determines to use the corresponding specific PC5 DRX. Regardless of whether the Rx UE starts the specific PC5 DRX, the default PC5 DRX is always running. Therefore, the Tx UE will potentially use the default PC5 DRX and the specific PC5 DRX at the same time.

### Example 1

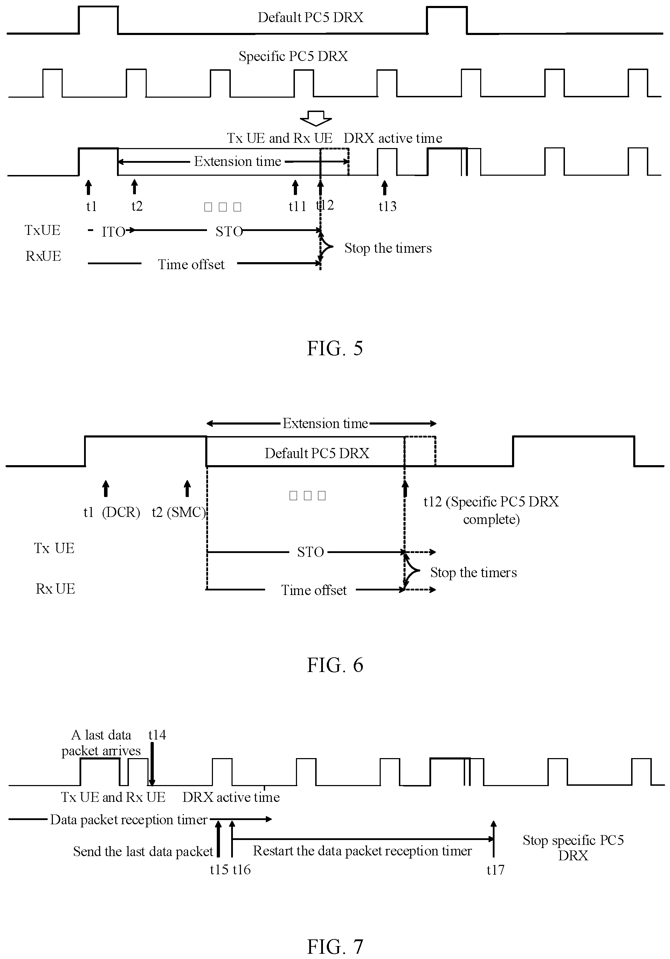

Optionally, as shown in FIG. 5, the Tx UE first sends the DCR at the time t1 within the on-duration of the specific PC5 DRX, and then the Tx UE and the Rx UE start the time offset timer after the on-duration of the default PC5 DRX. To better align the time offset of the Tx UE and the Rx UE, the Tx UE divides the timing of the time offset into two stages. To be specific, at the time t1, after the Tx UE sends the DCR, the Tx UE starts the initial time offset (ITO) timer, and at the time t2, after the Tx UE receives the SMC, the Tx UE starts the secondary time offset (STO) timer. The Rx UE uses only one time offset timer, that is, after receiving the DCR at the time t1, the Rx UE starts the time offset timer.

Specifically, at the time t2, the Rx UE sends the SMC. After the Tx UE successfully receives the SMC, the Tx UE stops the initial time offset timer and starts the secondary time offset timer.

Within the time offset, PC5-RRC normal and specific PC5 DRX configurations are completed between the unicast UEs by using a sidelink radio resource configuration (RRCReconfigurationSidelink). At the time t12, after the Rx UE receives parameter configuration information of the specific PC5 DRX, the Rx UE sends configuration acknowledgement information to the Tx UE by using RRCReconfigurationCompleteSidelink. Then the unicast UEs can send and receive data packets by using a combination of the default PC5 DRX and specific PC5 DRX configurations. After the time t12, the Tx UE has a data packet arriving at the AS. The Tx UE can wait for a time t13 nearest to the on-duration of the specific PC5 DRX to send the data packet.

### Example 2

Optionally, the initial time offset timer may be started in the first slot after the end of the on-duration of the default PC5 DRX.

As shown in FIG. 3, the Tx UE first sends the DCR at the time t1 within the on-duration of the specific PC5 DRX. The Tx UE starts the initial time offset (ITO) timer in the first slot after the end of the on-duration of the default PC5 DRX. At the extension time t2, the Rx UE sends the SMC, and at the same time, the Rx UE starts the time offset timer. At the time t2, after the Tx UE receives the SMC, the Tx UE stops the initial time offset timer and starts the secondary time offset timer.

It should be noted that the process after the time offset timer and the secondary time offset timer are started is the same as that in Example 1.

### Example 3

Optionally, the Tx UE sends the DCR within the on-duration and receives the SMC within the on-duration.

In this case, as shown in FIG. 6, the Tx UE and the Rx UE start the secondary time offset timer and the time offset timer respectively in the first slot after the end of the on-duration of the default PC5 DRX. In this case, the Tx UE does not need to start the initial time offset timer.

It should be noted that the process after the time offset timer and the secondary time offset timer are started is the same as that in Example 1.

### Specific application scenario 2

When the application layer of the Tx UE stops the unicast service, B 11 and B12 may be considered by the Rx UE. B12 is mainly considered in this application scenario. In B12, the Rx UE stops using the specific PC5 DRX by starting the data packet reception timer. A specific method is: if the Rx UE receives a new data packet from the Tx UE, the Rx UE (re)starts the data packet reception timer; and if the new data packet is a last service data packet, the Rx UE stops the specific PC5 DRX after the data packet reception timer expires, and only reserves the default PC5 DRX configuration to receive data packets.

As shown in FIG. 7, at a time t14, the last service data packet arrives at the application layer of the Tx UE. The Tx UE delivers the last service data packet to the AS through the V2X layer, and the MAC layer of the Tx UE sends the last service data packet at the time t15. The Rx UE receives the data packet and restarts the data packet reception timer at a time 116 (that is, the first slot after the on-duration). The Rx UE does not receive any new data packet during running of the timer (that is, the application layer has no data packet to send), and the data packet reception timer expires at a time 117. The Rx UE stops the data packet reception timer at the time 117 and stops using the specific PC5 DRX configuration, but the default PC5 DRX continues to run.

In conclusion, it can be learned that this embodiment of this application can achieve the following beneficial effects:

The default PC5 DRX configuration with relatively sparse on-durations is used to complete the unicast sidelink establishment process before the unicast sidelink is established, and the specific PC5 DRX associated with the unicast service QoS profile is used to complete transmission of unicast service data packets after the unicast sidelink is established. This configuration method can enable the UE to be basically in a sleep state before the service is started. Once the service is started, the unicast sidelink establishment process can be quickly completed between the unicast UEs.

It should be noted that the unicast sidelink communication method provided in this embodiment of this application may be performed by a unicast sidelink communication apparatus, or a control module configured to perform the unicast sidelink communication method in the unicast sidelink communication apparatus. A unicast sidelink communication apparatus provided in an embodiment of this application is described by using an example in which the unicast sidelink communication method is performed by the unicast sidelink communication apparatus in this embodiment of this application.

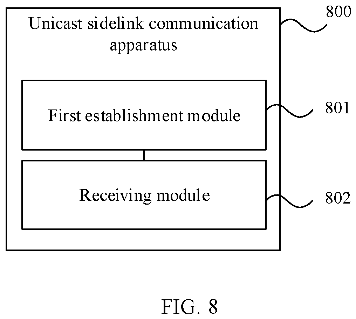

As shown in FIG. 8, an embodiment of this application provides a unicast sidelink communication apparatus 800. The apparatus is applied to a receive end configured with a discontinuous reception DRX mode, and includes:
a first establishment module 801, configured to establish a unicast sidelink with a transmit end within unicast establishment active time; and
a receiving module 802, configured to receive a unicast service data packet by using target configuration information after the unicast sidelink establishment is completed, where
the target configuration information includes parameter configuration information of second DRX, and the parameter configuration information of the second DRX is indicated by a quality of service QoS configuration of a unicast service; and
the unicast establishment active time includes one of the following:
   an on-duration corresponding to first DRX; and
   the on-duration corresponding to the first DRX and extension time after the on-duration corresponding to the first DRX.

Optionally, in a case that the unicast establishment active time includes the on-duration corresponding to the first DRX and the extension time after the on-duration corresponding to the first DRX, the first establishment module 801 is configured to:
in the unicast sidelink establishment process, transmit, with the transmit end, first target information within a first on-duration corresponding to the first DRX, and second target information within the extension time after the first on-duration, where
the first target information includes at least a direct communication request DCR in sidelink direct communication interface signaling PC5-S, and the second target information includes information other than the first target information in the PC5-S and sidelink direct communication interface radio resource control PC5-RRC information.

Optionally, a length of the extension time satisfies one of the following:
the length of the extension time is a preset value; and
the length of the extension time is determined based on a channel condition.

Optionally, in a case that a length of the extension time is determined based on a channel condition, the first establishment module 801 is configured to:
in a case that a first condition is satisfied, start an extension time timer, where
the first condition includes at least one of the following:
   a DCR sent by the transmit end has been received;
   security mode complete SMC signaling has been sent to the transmit end; and
   security mode complete acknowledgement SMC-ACK signaling fed back by the transmit end has been received.

Optionally, the first establishment module 801 is further configured to:
after sending sidelink radio resource configuration complete information, stop the extension time timer.

Optionally, in a case that the unicast establishment active time includes the on-duration corresponding to the first DRX, the first establishment module 801 is configured to:
in the unicast sidelink establishment process, transmit, with the transmit end, PC5-S and PC5-RRC information within at least one on-duration corresponding to the first DRX.

Optionally, after the receiving module 802 receives the unicast service data packet by using the target configuration information after the unicast sidelink establishment is completed, the apparatus further includes:
a stopping module, configured to stop receiving unicast service data packets in a case that a second condition is satisfied, where
the second condition includes at least one of the following:
   the receive end receives first indication information sent by the transmit end, where the first indication information is used to indicate the receive end to stop using the second DRX; and
   a first timer expires.

Optionally, that the receive end receives first indication information sent by the transmit end includes one of the following implementations:
the receive end receives the first indication information sent by the transmit end by using higher layer signaling; and
the receive end receives the first indication information sent by the transmit end by using media access control control element MAC-CE signaling.

Optionally, in a case that the receive end receives a new data packet, the first timer is started or restarted.

Optionally, the target configuration information further includes parameter configuration information of the first DRX.

Optionally, in a case that the parameter configuration information of the second DRX is indicated by one QoS configuration, the parameter configuration information of the second DRX is determined by a packet delay budget PDB; or in a case that the parameter configuration information of the second DRX is indicated by at least two QoS configurations, the parameter configuration information of the second DRX is determined by a preset PDB in the at least two QoS configurations.

Optionally, the preset PDB is a smallest PDB in the at least two QoS configurations.

It should be noted that, by using the preconfigured on-duration corresponding to the first DRX used before the unicast link is established or the on-duration corresponding to the first DRX and the extension time after the on-duration corresponding to the first DRX, the receive end establishes the unicast link with the transmit end, thereby improving link establishment efficiency and further reducing terminal power consumption.

The unicast sidelink communication apparatus in this embodiment of this application may be an apparatus, or an apparatus or an electronic device with an operating system, or may be a component, an integrated circuit, or a chip in a terminal. The apparatus or the electronic device may be a mobile terminal, or may be a nonmobile terminal. For example, the mobile terminal may include but is not limited to the foregoing illustrated type of the terminal. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The unicast sidelink communication apparatus provided in this embodiment of this application can implement each process implemented by the method embodiment in FIG. 1, with the same technical effect achieved. To avoid repetition, details are not described herein again.

An embodiment of this application further provides a terminal. The terminal is a receive end configured with a discontinuous reception DRX mode. The terminal includes a processor and a communication interface. The processor is configured to establish a unicast sidelink with a transmit end within unicast establishment active time; and the communication interface is configured to receive a unicast service data packet by using target configuration information after the unicast sidelink establishment is completed, where
the target configuration information includes parameter configuration information of second DRX, and the parameter configuration information of the second DRX is indicated by a quality of service QoS configuration of a unicast service; and
the unicast establishment active time includes one of the following:
   an on-duration corresponding to first DRX; and
   the on-duration corresponding to the first DRX and extension time after the on-duration corresponding to the first DRX.

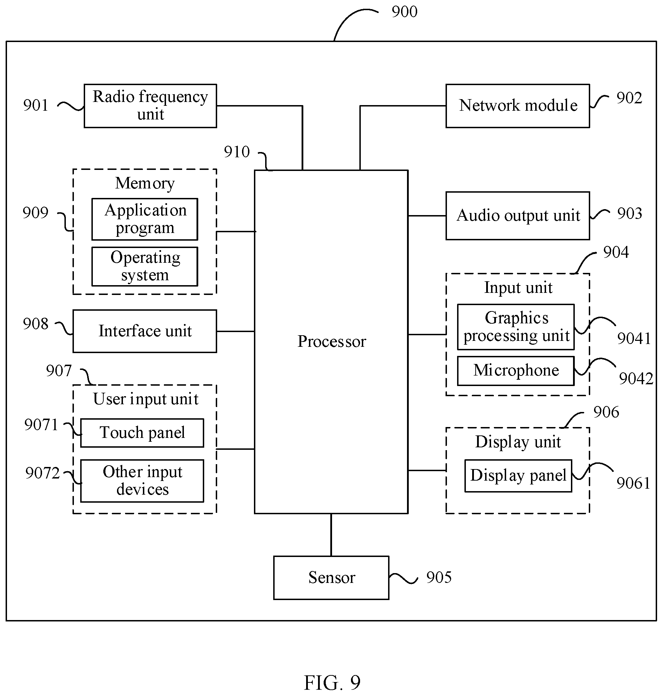

The terminal embodiment corresponds to the foregoing receive-end method embodiment, and each implementation process and implementation of the foregoing method embodiment can be applied to the terminal embodiment, with the same technical effect achieved. Specifically, FIG. 9 is a schematic diagram of a hardware structure of a terminal for implementing an embodiment of this application.

The terminal 900 is a receive end configured with a discontinuous reception DRX mode, and includes but is not limited to at least some components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (for example, a battery) supplying power to all components. Optionally, the power supply may be logically connected to the processor 910 through a power management system. In this way, functions such as charge management, discharge management, and power consumption management are implemented by using the power management system. The terminal structure shown in FIG. 9 does not constitute a limitation on the terminal. The terminal may include more or fewer components than those shown in the figure, or some components are combined, or component arrangements are different. Details are not described herein again.

It should be understood that, in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, or the like. The user input unit 907 includes a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control button or a power button), a trackball, a mouse, and a joystick. Details are not described herein again.

In this embodiment of this application, after receiving downlink data from a network-side device, the radio frequency unit 901 sends the downlink data to the processor 910 for processing, and in addition, sends uplink data to the network-side device. Generally, the radio frequency unit 901 includes but is not limited to an antenna, at least one amplifier, a transceiver, a coupler, a low noise amplifier, a duplexer, and the like.

The memory 909 may be configured to store software programs or instructions and various data. The memory 909 may primarily include a program or instruction storage area and a data storage area. The program or instruction storage area may store an operating system, an application program or instructions (such as an audio play function and an image play function) required by at least one function, and the like. In addition, the memory 909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 910 may include one or more processing units. Optionally, the processor 910 may integrate an application processor and a modem processor. The application processor mainly processes the operating system, a user interface, an application program or an instruction, and the like. The modem processor mainly processes wireless communication. For example, the modem processor is a baseband processor. It may be understood that the modem processor may alternatively not be integrated in the processor 910.

The processor 910 is configured to:
establish a unicast sidelink with a transmit end within unicast establishment active time.

The radio frequency unit 901 is configured to:
receive a unicast service data packet by using target configuration information after the unicast sidelink establishment is completed, where
the target configuration information includes parameter configuration information of second DRX, and the parameter configuration information of the second DRX is indicated by a quality of service QoS configuration of a unicast service; and
the unicast establishment active time includes one of the following:
   an on-duration corresponding to first DRX; and
   the on-duration corresponding to the first DRX and extension time after the on-duration corresponding to the first DRX.

In this embodiment of this application, by using the preconfigured on-duration corresponding to the first DRX used before the unicast link is established or the on-duration corresponding to the first DRX and the extension time after the on-duration corresponding to the first DRX, the terminal establishes the unicast link with the transmit end, thereby improving link establishment efficiency and further reducing terminal power consumption.

Optionally, in a case that the unicast establishment active time includes the on-duration corresponding to the first DRX and the extension time after the on-duration corresponding to the first DRX, the processor 910 is configured to:
in the unicast sidelink establishment process, transmit, with the transmit end, first target information within a first on-duration corresponding to the first DRX, and second target information within the extension time after the first on-duration, where
the first target information includes at least a direct communication request DCR in sidelink direct communication interface signaling PC5-S, and the second target information includes information other than the first target information in the PC5-S and sidelink direct communication interface radio resource control PC5-RRC information.

Optionally, a length of the extension time satisfies one of the following:
the length of the extension time is a preset value; and
the length of the extension time is determined based on a channel condition.

Optionally, in a case that a length of the extension time is determined based on a channel condition, the processor 910 is configured to:
in a case that a first condition is satisfied, start an extension time timer, where
the first condition includes at least one of the following:
   a DCR sent by the transmit end has been received;
   security mode complete SMC signaling has been sent to the transmit end; and
   security mode complete acknowledgement SMC-ACK signaling fed back by the transmit end has been received.

Optionally, the processor 910 is further configured to:
after sending sidelink radio resource configuration complete information, stop the extension time timer.

Optionally, in a case that the unicast establishment active time includes the on-duration corresponding to the first DRX, the processor 910 is configured to:
in the unicast sidelink establishment process, transmit, with the transmit end, PC5-S and PC5-RRC information within at least one on-duration corresponding to the first DRX.

Optionally, after the radio frequency unit 901 receives the unicast service data packet by using the target configuration information after the unicast sidelink establishment is completed, the processor 910 is further configured to:
in a case that a second condition is satisfied, stop receiving unicast service data packets, where
the second condition includes at least one of the following:
   the receive end receives first indication information sent by the transmit end, where the first indication information is used to indicate the receive end to stop using the second DRX; and
   a first timer expires.

Optionally, that the receive end receives first indication information sent by the transmit end includes one of the following implementations:
the receive end receives the first indication information sent by the transmit end by using higher layer signaling; and
the receive end receives the first indication information sent by the transmit end by using media access control control element MAC-CE signaling.

Optionally, in a case that the radio frequency unit 901 receives a new data packet, the first timer is started or restarted.

Optionally, the target configuration information further includes parameter configuration information of the first DRX.

Optionally, in a case that the parameter configuration information of the second DRX is indicated by one QoS configuration, the parameter configuration information of the second DRX is determined by a packet delay budget PDB; or in a case that the parameter configuration information of the second DRX is indicated by at least two QoS configurations, the parameter configuration information of the second DRX is determined by a preset PDB in the at least two QoS configurations.

Optionally, the preset PDB is a smallest PDB in the at least two QoS configurations.

Optionally, an embodiment of this application further provides a terminal. The terminal is a receive end, and includes a processor, a memory, and a program or instructions stored in the memory and capable of running on the processor. When the program or instructions are executed by the processor, each process of the embodiment of the unicast sidelink communication method is implemented, with the same technical effect achieved. To avoid repetition, details are not described herein again.

An embodiment of this application further provides a readable storage medium. The readable storage medium may be volatile or non-volatile. The readable storage medium stores a program or instructions. When the program or instructions are executed by a processor, each process of the embodiment of the unicast sidelink communication method is implemented, with the same technical effect achieved. To avoid repetition, details are not described herein again. The computer-readable storage medium is, for example, a read-only memory (Read-Only Memory, ROM), a random access memory (Random Access Memory, RAM), a magnetic disk, or an optical disc.

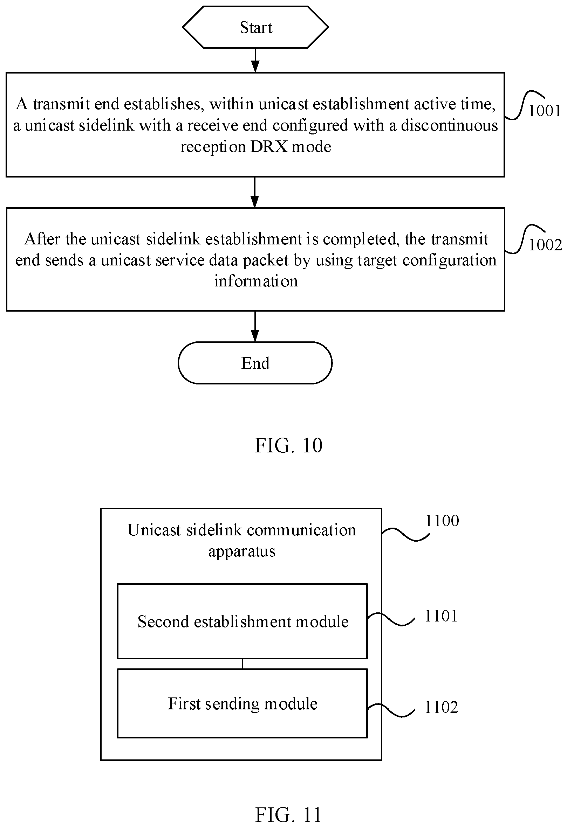

As shown in FIG. 10, to cooperate with reception at the receive end, an embodiment of this application further provides a unicast sidelink communication method. The method is applied to a transmit end and includes the following steps.

Step 1001: A transmit end establishes, within unicast establishment active time, a unicast sidelink with a receive end configured with a discontinuous reception DRX mode.

Step 1002: After the unicast sidelink establishment is completed, the receive end sends a unicast service data packet by using target configuration information.

The target configuration information includes parameter configuration information of second DRX, and the parameter configuration information of the second DRX is indicated by a quality of service QoS configuration of a unicast service; and the unicast establishment active time includes one of the following:
an on-duration corresponding to first DRX; and
the on-duration corresponding to the first DRX and extension time after the on-duration corresponding to the first DRX.

Optionally, in a case that the unicast establishment active time includes the on-duration corresponding to the first DRX and the extension time after the on-duration corresponding to the first DRX, that a transmit end establishes, within unicast establishment active time, a unicast sidelink with a receive end configured with a discontinuous reception DRX mode includes:
in the unicast sidelink establishment process, the transmit end transmits, with the receive end, first target information within a first on-duration corresponding to the first DRX, and second target information within the extension time after the first on-duration, where
the first target information includes at least a direct communication request DCR in sidelink direct communication interface signaling PC5-S, and the second target information includes information other than the first target information in the PC5-S and sidelink direct communication interface radio resource control PC5-RRC information.

Optionally, a length of the extension time satisfies one of the following:
the length of the extension time is a preset value; and
the length of the extension time is determined based on a channel condition.

Optionally, in a case that a length of the extension time is determined based on a channel condition, that the transmit end transmits, with the receive end, first target information within a first on-duration corresponding to the first DRX, and second target information within the extension time after the first on-duration includes:
in a case that a third condition is satisfied, the transmit end starts an initial time offset timer, where
the third condition includes at least one of the following:
   a direct communication request DCR has been sent to the receive end; and
   within the on-duration corresponding to the first DRX, the transmit end does not receive SMC sent by the receive end, and a first time unit following the on-duration corresponding to the first DRX arrives.

Optionally, after the transmit end starts the initial time offset timer in the case that the third condition is satisfied, the method further includes:
in a case that a fourth condition is satisfied, the transmit end starts a first timer, where
the fourth condition includes at least one of the following:
   after receiving security mode complete SMC signaling, the transmit end stops the initial time offset timer; and
   within the on-duration corresponding to the first DRX, the transmit end receives the SMC sent by the receive end.

Optionally, after the transmit end starts the first timer in the case that the fourth condition is satisfied, the method further includes:
after receiving sidelink radio resource configuration complete information, the transmit end stops the first timer.

Optionally, the length of the extension time is equal to a sum of a length of the initial time offset timer and a length of the first timer; or
the length of the extension time is equal to a length of the first timer.

Optionally, in a case that the unicast establishment active time includes the on-duration corresponding to the first DRX, that a transmit end establishes, within unicast establishment active time, a unicast sidelink with a receive end configured with a discontinuous reception DRX mode includes:
in the unicast sidelink establishment process, transmitting PC5-S and PC5-RRC information within at least one on-duration corresponding to the first DRX.

Optionally, after the transmit end sends the unicast service data packet by using the target configuration information, after the unicast sidelink establishment is completed, the method further includes:
the transmit end sends first indication information to the receive end, where
the first indication information is used to indicate the receive end to stop using the second DRX.

Optionally, that the transmit end sends first indication information to the receive end includes one of the following:
the transmit end sends the first indication information to the receive end by using higher layer signaling; and
the transmit end sends the first indication information to the receive end by using media access control control element MAC-CE signaling.

Optionally, the target configuration information further includes parameter configuration information of the first DRX.

Optionally, in a case that the parameter configuration information of the second DRX is indicated by one QoS configuration, the parameter configuration information of the second DRX is determined by a packet delay budget PDB; or in a case that the parameter configuration information of the second DRX is indicated by at least two QoS configurations, the parameter configuration information of the second DRX is determined by a preset PDB in the at least two QoS configurations.

Optionally, the preset PDB is a smallest PDB in the at least two QoS configurations.

It should be noted that all descriptions of the transmit end in the foregoing embodiment are applicable to the embodiment of the unicast sidelink communication method applied to the transmit end, with the same technical effect achieved. Details are not described herein again.

As shown in FIG. 11, an embodiment of this application further provides a unicast sidelink communication apparatus 1100. The apparatus is applied to a transmit end and includes:
a second establishment module 1101, configured to establish, within unicast establishment active time, a unicast sidelink with a receive end configured with a discontinuous reception DRX mode; and
a first sending module 1102, configured to send a unicast service data packet by using target configuration information after the unicast sidelink establishment is completed, where
the target configuration information includes parameter configuration information of second DRX, and the parameter configuration information of the second DRX is indicated by a quality of service QoS configuration of a unicast service; and the unicast establishment active time includes one of the following:
   an on-duration corresponding to first DRX; and
   the on-duration corresponding to the first DRX and extension time after the on-duration corresponding to the first DRX.

Optionally, in a case that the unicast establishment active time includes the on-duration corresponding to the first DRX and the extension time after the on-duration corresponding to the first DRX, the second establishment module 1101 is configured to:
in the unicast sidelink establishment process, transmit, with the receive end, first target information within a first on-duration corresponding to the first DRX, and second target information within the extension time after the first on-duration, where
the first target information includes at least a direct communication request DCR in sidelink direct communication interface signaling PC5-S, and the second target information includes information other than the first target information in the PC5-S and sidelink direct communication interface radio resource control PC5-RRC information.

Optionally, a length of the extension time satisfies one of the following:
the length of the extension time is a preset value; and
the length of the extension time is determined based on a channel condition.

Optionally, in a case that a length of the extension time is determined based on a channel condition, the second establishment module 1101 is configured to:
in a case that a third condition is satisfied, start an initial time offset timer, where
the third condition includes at least one of the following:
   a direct communication request DCR has been sent to the receive end; and
   within the on-duration corresponding to the first DRX, the transmit end does not receive SMC sent by the receive end, and a first time unit following the on-duration corresponding to the first DRX arrives.

Optionally, after the second establishment module 1101 starts the initial time offset timer in the case that the third condition is satisfied, the second establishment module 1101 is further configured to:
in a case that a fourth condition is satisfied, start a first timer, where
the fourth condition includes at least one of the following:
   after receiving security mode complete SMC signaling, the transmit end stops the initial time offset timer; and
   within the on-duration corresponding to the first DRX, the transmit end receives the SMC sent by the receive end.

Optionally, after the second establishment module 1101 starts the first time offset timer in the case that the fourth condition is satisfied, the second establishment module 1101 is further configured to:
after receiving sidelink radio resource configuration complete information, stop the first timer.

Optionally, the length of the extension time is equal to a sum of a length of the initial time offset timer and a length of the first timer; or
the length of the extension time is equal to a length of the first timer.

Optionally, in a case that the unicast establishment active time includes the on-duration corresponding to the first DRX, the second establishment module 1101 is configured to:
in the unicast sidelink establishment process, transmit PC5-S and PC5-RRC information within at least one on-duration corresponding to the first DRX.

Optionally, after the first sending module 1102 sends the unicast service data packet by using parameter configuration information of the first DRX and the parameter configuration information of the second DRX, the apparatus further includes:
a second sending module, configured to send first indication information to the receive end, where
the first indication information is used to indicate the receive end to stop using the second DRX.

Optionally, the second sending module is configured to implement at least one of the following:
the transmit end sends the first indication information to the receive end by using higher layer signaling; and
the transmit end sends the first indication information to the receive end by using media access control control element MAC-CE signaling.

Optionally, the target configuration information further includes parameter configuration information of the first DRX.

Optionally, in a case that the parameter configuration information of the second DRX is indicated by one QoS configuration, the parameter configuration information of the second DRX is determined by a packet delay budget PDB; or in a case that the parameter configuration information of the second DRX is indicated by at least two QoS configurations, the parameter configuration information of the second DRX is determined by a preset PDB in the at least two QoS configurations.

Optionally, the preset PDB is a smallest PDB in the at least two QoS configurations.

It should be noted that this apparatus embodiment is an apparatus in a one-to-one correspondence with the foregoing method embodiment. All implementations of the foregoing method embodiment are applicable to this apparatus embodiment, with the same technical effect achieved. Details are not described herein again.

An embodiment of this application further provides a terminal. The terminal is a transmit end, and includes a processor, a memory, and a program or instructions stored in the memory and capable of running on the processor. When the program or instructions are executed by the processor, each process of the foregoing embodiment of the unicast sidelink communication method applied to the transmit end is implemented, with the same technical effect achieved. To avoid repetition, details are not described herein again.

An embodiment of this application further provides a readable storage medium. The readable storage medium may be volatile or non-volatile. The computer-readable storage medium stores a program or instructions. When the program or instructions are executed by a processor, each process of the embodiment of the unicast sidelink communication method applied to a transmit end is implemented, with the same technical effect achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a terminal. The terminal is a transmit end. The terminal includes a processor and a communication interface. The processor is configured to establish, within unicast establishment active time, a unicast sidelink with a receive end configured with a discontinuous reception DRX mode; and the communication interface is configured to send a unicast service data packet by using target configuration information after the unicast sidelink establishment is completed, where
the target configuration information includes parameter configuration information of second DRX, and the parameter configuration information of the second DRX is indicated by a quality of service QoS configuration of a unicast service; and the unicast establishment active time includes one of the following:
an on-duration corresponding to first DRX; and
the on-duration corresponding to the first DRX and extension time after the on-duration corresponding to the first DRX.

The terminal embodiment corresponds to the foregoing embodiment of the unicast sidelink communication method at the transmit end, and each implementation process and implementation of the foregoing method embodiment can be applied to the terminal embodiment, with the same technical effect achieved.

Specifically, an embodiment of this application further provides a terminal. The terminal is a transmit end. Specifically, a structure of the transmit end is similar to that of the receive end shown in FIG. 9. Details are not described herein again.

Optionally, a processor is configured to:
establish, within unicast establishment active time, a unicast sidelink with a receive end configured with a discontinuous reception DRX mode.

A radio frequency unit is configured to send a unicast service data packet by using target configuration information after the unicast sidelink establishment is completed, where
the target configuration information includes parameter configuration information of second DRX, and the parameter configuration information of the second DRX is indicated by a quality of service QoS configuration of a unicast service; and the unicast establishment active time includes one of the following:
an on-duration corresponding to first DRX; and
the on-duration corresponding to the first DRX and extension time after the on-duration corresponding to the first DRX.

Optionally, in a case that the unicast establishment active time includes the on-duration corresponding to the first DRX and the extension time after the on-duration corresponding to the first DRX, the radio frequency unit is configured to:
in the unicast sidelink establishment process, transmit, with the receive end, first target information within a first on-duration corresponding to the first DRX, and second target information within the extension time after the first on-duration, where
the first target information includes at least a direct communication request DCR in sidelink direct communication interface signaling PC5-S, and the second target information includes information other than the first target information in the PC5-S and sidelink direct communication interface radio resource control PC5-RRC information.

Optionally, a length of the extension time satisfies one of the following:
the length of the extension time is a preset value; and
the length of the extension time is determined based on a channel condition.

Optionally, in a case that a length of the extension time is determined based on a channel condition, the processor is configured to:
in a case that a third condition is satisfied, start an initial time offset timer, where
the third condition includes at least one of the following:
   a direct communication request DCR has been sent to the receive end; and
   within the on-duration corresponding to the first DRX, the transmit end does not receive SMC sent by the receive end, and a first time unit following the on-duration corresponding to the first DRX arrives.

Optionally, after the processor starts the initial time offset timer in the case that the third condition is satisfied, the processor is further configured to:
in a case that a fourth condition is satisfied, start a first timer, where
the fourth condition includes at least one of the following:
   after receiving security mode complete SMC signaling, the transmit end stops the initial time offset timer; and
   within the on-duration corresponding to the first DRX, the transmit end receives the SMC sent by the receive end.

Optionally, after the processor starts the first timer in the case that the fourth condition is satisfied, the processor is further configured to:
after receiving sidelink radio resource configuration complete information, stop the first timer.

Optionally, the length of the extension time is equal to a sum of a length of the initial time offset timer and a length of the first timer; or
the length of the extension time is equal to a length of the first timer.

Optionally, in a case that the unicast establishment active time includes the on-duration corresponding to the first DRX, the processor is configured to:
in the unicast sidelink establishment process, transmit PC5-S and PC5-RRC information within at least one on-duration corresponding to the first DRX.

Optionally, after the radio frequency unit sends the unicast service data packet by using the target configuration information after the unicast sidelink establishment is completed, the radio frequency unit is further configured to:
send first indication information to the receive end, where
the first indication information is used to indicate the receive end to stop using the second DRX.

Optionally, the radio frequency unit is configured to implement at least one of the following:
sending the first indication information to the receive end by using higher layer signaling; and
sending the first indication information to the receive end by using media access control control element MAC-CE signaling.

Optionally, the target configuration information further includes parameter configuration information of the first DRX.

Optionally, in a case that the parameter configuration information of the second DRX is indicated by one QoS configuration, the parameter configuration information of the second DRX is determined by a packet delay budget PDB; or in a case that the parameter configuration information of the second DRX is indicated by at least two QoS configurations, the parameter configuration information of the second DRX is determined by a preset PDB in the at least two QoS configurations.

Optionally, the preset PDB is a smallest PDB in the at least two QoS configurations.

It should be noted that the unicast sidelink communication apparatuses applied to the transmit end and the receive end mentioned in the embodiments of this application can be disposed in a same device. In other words, the device can implement both an information sending function and an information receiving function.

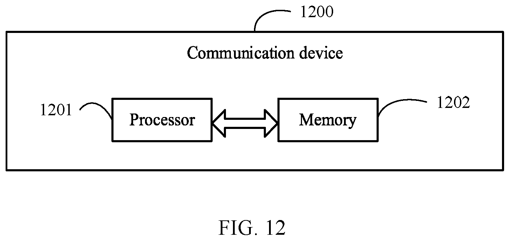

Optionally, as shown in FIG. 12, an embodiment of this application further provides a communication device 1200, including a processor 1201, a memory 1202, and a program or instructions stored in the memory 1202 and capable of running on the processor 1201. For example, when the communication device 1200 is a receive end, and the program or instructions are executed by the processor 1201, each process of the foregoing embodiment of the unicast sidelink communication method applied to the receive end is implemented, with the same technical effect achieved. When the communication device 1200 is a transmit end, and the program or instructions are executed by the processor 1201, each process of the foregoing embodiment of the unicast sidelink communication method applied to the transmit end is implemented, with the same technical effect achieved. To avoid repetition, details are not described herein again.

A terminal used in an embodiment of this application may be a device that provides a user with voice and/or data connectivity, for example, a handheld device having a wireless connection function, or another processing device connected to a wireless modem. In different systems, names of terminal devices may also vary. For example, in a 5th Generation mobile communication technology (5th-Generation, 5G) system, a terminal device may be referred to as user equipment (User Equipment, UE). A wireless terminal device may communicate with one or more core networks (Core Network, CN) through a radio access network (Radio Access Network, RAN). The wireless terminal device may be a mobile terminal device, such as a mobile phone (also referred to as a "cellular" phone) and a computer having a mobile terminal device, for example, may be a portable, pocket-sized, handheld, computer built-in, or in-vehicle mobile apparatus, which exchanges voice and/or data with the radio access network. For example, it may be a device such as a personal communication service (Personal Communication Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal device may also be referred to as a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), or a user device (user device). This is not limited in the embodiments of this application.

A network-side device used in an embodiment of this application may be a base transceiver station (Base Transceiver Station, BTS) in a global system for mobile communications (Global System for Mobile Communications, GSM) or a code division multiple access (Code Division Multiple Access, CDMA) system, or may be a NodeB (NodeB, NB) in a wideband code division multiple access (Wideband Code Division Multiple Access, WCDMA) system, or may be an evolved NodeB (Evolved NodeB, eNB or eNodeB), a relay station, or an access point in an LTE system, or may be a base station in a future 5G network, or the like. This is not limited herein.

The network-side device and the terminal may respectively use one or more antennas to perform multiple-input multiple-output (Multi Input Multi Output, MIMO) transmission with each other. The MIMO transmission may be single user MIMO (Single User MIMO, SU-MIMO) or multiple user MIMO (Multiple User MIMO, MU-MIMO). Depending on forms and a quantity of antenna combinations, the MIMO transmission may be 2D-MIMO, 3D-MIMO, FD-MIMO, or massive-MIMO, or may be diversity transmission, precoding transmission, beamforming transmission, or the like.

An embodiment of this application further provides a computer program product. The computer program product is stored in a non-transitory storage medium. The computer program product is executed by at least one processor to implement the steps of the foregoing unicast sidelink communication method or configuration method, with the same technical effect achieved. To avoid repetition, details are not described herein again.

In addition, an embodiment of this application provides a chip. The chip includes a processor and a communication interface. The communication interface is coupled to the processor. The processor is configured to run a program or instructions to implement each process of the foregoing embodiment of the unicast sidelink communication method or configuration method, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for enabling a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A unicast sidelink communication method, comprising:
establishing, by a receive end configured with a discontinuous reception DRX mode, a unicast sidelink with a transmit end within unicast establishment active time; and
after the unicast sidelink establishment is completed, receiving, by the receive end, a unicast service data packet by using target configuration information, wherein
the target configuration information comprises parameter configuration information of second DRX, and the parameter configuration information of the second DRX is indicated by a quality of service QoS configuration of a unicast service; and
the unicast establishment active time comprises one of the following:
an on-duration corresponding to first DRX; and
the on-duration corresponding to the first DRX and extension time after the on-duration corresponding to the first DRX.

2. The method according to claim 1, wherein in a case that the unicast establishment active time comprises the on-duration corresponding to the first DRX and the extension time after the on-duration corresponding to the first DRX, the establishing, by a receive end, a unicast sidelink with a transmit end comprises:
in the unicast sidelink establishment process, transmitting, by the receive end with the transmit end, first target information within a first on-duration corresponding to the first DRX, and second target information within the extension time after the first on-duration, wherein
the first target information comprises at least a direct communication request DCR in sidelink direct communication interface signaling PC5-S, and the second target information comprises information other than the first target information in the PC5-S and sidelink direct communication interface radio resource control PC5-RRC information.

3. The method according to claim 2, wherein a length of the extension time satisfies one of the following:
the length of the extension time is a preset value; and
the length of the extension time is determined based on a channel condition.

4. The method according to claim 2, wherein in a case that a length of the extension time is determined based on a channel condition, the transmitting, by the receive end with the transmit end, first target information within the first on-duration corresponding to the first DRX, and second target information within the extension time after the first on-duration comprises:
in a case that a first condition is satisfied, starting, by the receive end, an extension time timer, wherein
the first condition comprises at least one of the following:
a DCR sent by the transmit end has been received;
security mode complete SMC signaling has been sent to the transmit end; and
security mode complete acknowledgement SMC-ACK signaling fed back by the transmit end has been received.

5. The method according to claim 4, wherein the transmitting, by the receive end with the transmit end, first target information within the first on-duration corresponding to the first DRX, and second target information within the extension time after the first on-duration further comprises:
after sending sidelink radio resource configuration complete information, stopping, by the receive end, the extension time timer.

6. The method according to claim 1, wherein in a case that the unicast establishment active time comprises the on-duration corresponding to the first DRX, the establishing, by a receive end, a unicast sidelink with a transmit end within unicast establishment active time comprises:
in the unicast sidelink establishment process, transmitting, by the receive end with the transmit end, PC5-S and PC5-RRC information within at least one on-duration corresponding to the first DRX.

7. The method according to claim 1, wherein after the receiving, by the receive end, a unicast service data packet by using target configuration information after the unicast sidelink establishment is completed, the method further comprises:
in a case that a second condition is satisfied, stopping receiving unicast service data packets, wherein
the second condition comprises at least one of the following:
the receive end receives first indication information sent by the transmit end, wherein the first indication information is used to indicate the receive end to stop using the second DRX; and
a first timer expires.

8. The method according to claim 7, wherein that the receive end receives first indication information sent by the transmit end comprises one of the following:
the receive end receives the first indication information sent by the transmit end by using higher layer signaling; and
the receive end receives the first indication information sent by the transmit end by using media access control control element MAC-CE signaling.

9. The method according to claim 8, wherein in a case that the receive end receives a new data packet, the first timer is started or restarted.

10. The method according to claim 1, wherein the target configuration information further comprises parameter configuration information of the first DRX.

11. The method according to claim 1, wherein in a case that the parameter configuration information of the second DRX is indicated by one QoS configuration, the parameter configuration information of the second DRX is determined by a packet delay budget PDB; or in a case that the parameter configuration information of the second DRX is indicated by at least two QoS configurations, the parameter configuration information of the second DRX is determined by a preset PDB in the at least two QoS configurations.

12. The method according to claim 11, wherein the preset PDB is a smallest PDB in the at least two QoS configurations.

13. A unicast sidelink communication method, comprising:
establishing, by a transmit end within unicast establishment active time, a unicast sidelink with a receive end configured with a discontinuous reception DRX mode; and
after the unicast sidelink establishment is completed, sending, by the transmit end, a unicast service data packet by using target configuration information, wherein
the target configuration information comprises parameter configuration information of second DRX, and the parameter configuration information of the second DRX is indicated by a quality of service QoS configuration of a unicast service; and
the unicast establishment active time comprises one of the following:
an on-duration corresponding to first DRX; and
the on-duration corresponding to the first DRX and extension time after the on-duration corresponding to the first DRX.

14. The method according to claim 13, wherein in a case that the unicast establishment active time comprises the on-duration corresponding to the first DRX and the extension time after the on-duration corresponding to the first DRX, the establishing, by a transmit end within unicast establishment active time, a unicast sidelink with a receive end configured with a discontinuous reception DRX mode comprises:
in the unicast sidelink establishment process, transmitting, by the transmit end with the receive end, first target information within a first on-duration corresponding to the first DRX, and second target information within the extension time after the first on-duration, wherein
the first target information comprises at least a direct communication request DCR in sidelink direct communication interface signaling PC5-S, and the second target information comprises information other than the first target information in the PC5-S and sidelink direct communication interface radio resource control PC5-RRC information.

15. The method according to claim 14, wherein a length of the extension time satisfies one of the following:
the length of the extension time is a preset value; and
the length of the extension time is determined based on a channel condition.

16. The method according to claim 14, wherein in a case that a length of the extension time is determined based on a channel condition, the transmitting, by the transmit end with the receive end, first target information within a first on-duration corresponding to the first DRX, and second target information within the extension time after the first on-duration comprises:
in a case that a third condition is satisfied, starting, by the transmit end, an initial time offset timer, wherein
the third condition comprises at least one of the following:
after sending a direct communication request DCR to the receive end; and
within the on-duration corresponding to the first DRX, the transmit end does not receive SMC sent by the receive end, and a first time unit following the on-duration corresponding to the first DRX arrives.

17. The method according to claim 16, wherein after the starting, by the transmit end, an initial time offset timer in a case that a third condition is satisfied, the method further comprises:
in a case that a fourth condition is satisfied, starting, by the transmit end, a first timer, wherein
the fourth condition comprises at least one of the following:
after receiving security mode complete SMC signaling, the transmit end stops the initial time offset timer; and
within the on-duration corresponding to the first DRX, the transmit end receives the SMC sent by the receive end.

18. The method according to claim 17, wherein after the starting, by the transmit end, a first timer in a case that a fourth condition is satisfied, the method further comprises:
after receiving sidelink radio resource configuration complete information, stopping, by the transmit end, the first timer.

19. The method according to claim 17, wherein the length of the extension time is equal to a sum of a length of the initial time offset timer and a length of the first timer; or
the length of the extension time is equal to a length of the first timer.

20. The method according to claim 13, wherein in a case that the unicast establishment active time comprises the on-duration corresponding to the first DRX, the establishing, by a transmit end within unicast establishment active time, a unicast sidelink with a receive end configured with a discontinuous reception DRX mode comprises:
in the unicast sidelink establishment process, transmitting PC5-S and PC5-RRC information within at least one on-duration corresponding to the first DRX.

21. The method according to claim 13, wherein after the sending, by the transmit end, a unicast service data packet by using target configuration information after the unicast sidelink establishment is completed, the method further comprises:
sending, by the transmit end, first indication information to the receive end, wherein
the first indication information is used to indicate the receive end to stop using the second DRX.

22. The method according to claim 21, wherein the sending, by the transmit end, first indication information to the receive end comprises at least one of the following:
sending, by the transmit end, the first indication information to the receive end by using higher layer signaling; and
sending, by the transmit end, the first indication information to the receive end by using media access control control element MAC-CE signaling.

23. The method according to claim 13, wherein the target configuration information further comprises parameter configuration information of the first DRX.

24. The method according to claim 13, wherein in a case that the parameter configuration information of the second DRX is indicated by one QoS configuration, the parameter configuration information of the second DRX is determined by a packet delay budget PDB; or in a case that the parameter configuration information of the second DRX is indicated by at least two QoS configurations, the parameter configuration information of the second DRX is determined by a preset PDB in the at least two QoS configurations.

25. The method according to claim 24, wherein the preset PDB is a smallest PDB in the at least two QoS configurations.

26. A unicast sidelink communication apparatus, applied to a receive end configured with a discontinuous reception DRX mode, wherein the apparatus comprises:
a first establishment module, configured to establish a unicast sidelink with a transmit end within unicast establishment active time; and
a receiving module, configured to receive a unicast service data packet by using target configuration information after the unicast sidelink establishment is completed, wherein
the target configuration information comprises parameter configuration information of second DRX, and the parameter configuration information of the second DRX is indicated by a quality of service QoS configuration of a unicast service; and
the unicast establishment active time comprises one of the following:
an on-duration corresponding to first DRX; and
the on-duration corresponding to the first DRX and extension time after the on-duration corresponding to the first DRX.

27. The apparatus according to claim 26, wherein in a case that the unicast establishment active time comprises the on-duration corresponding to the first DRX and the extension time after the on-duration corresponding to the first DRX, the first establishment module is configured to:
in the unicast sidelink establishment process, transmit, with the transmit end, first target information within a first on-duration corresponding to the first DRX, and second target information within the extension time after the first on-duration, wherein
the first target information comprises at least a direct communication request DCR in sidelink direct communication interface signaling PC5-S, and the second target information comprises information other than the first target information in the PC5-S and sidelink direct communication interface radio resource control PC5-RRC information.

28. The apparatus according to claim 26, wherein in a case that the unicast establishment active time comprises the on-duration corresponding to the first DRX, the first establishment module is configured to:
in the unicast sidelink establishment process, transmit, with the transmit end, PC5-S and PC5-RRC information within at least one on-duration corresponding to the first DRX.

29. The apparatus according to claim 26, wherein after the receiving module receives the unicast service data packet by using parameter configuration information of the first DRX and the parameter configuration information of the second DRX after the unicast sidelink establishment is completed, the apparatus further comprises:
a stopping module, configured to stop receiving unicast service data packets in a case that a second condition is satisfied, wherein
the second condition comprises at least one of the following:
the receive end receives first indication information sent by the transmit end, wherein the first indication information is used to indicate the receive end to stop using the second DRX; and
a first timer expires.

30. A unicast sidelink communication apparatus, applied to a transmit end and comprising:
a second establishment module, configured to establish, within unicast establishment active time, a unicast sidelink with a receive end configured with a discontinuous reception DRX mode; and
a first sending module, configured to send a unicast service data packet by using target configuration information after the unicast sidelink establishment is completed, wherein
the target configuration information comprises parameter configuration information of second DRX, and the parameter configuration information of the second DRX is indicated by a quality of service QoS configuration of a unicast service; and the unicast establishment active time comprises one of the following:
an on-duration corresponding to first DRX; and
the on-duration corresponding to the first DRX and extension time after the on-duration corresponding to the first DRX.

31. The apparatus according to claim 30, wherein in a case that the unicast establishment active time comprises the on-duration corresponding to the first DRX and the extension time after the on-duration corresponding to the first DRX, the second establishment module is configured to:
in the unicast sidelink establishment process, transmit, with the receive end, first target information within a first on-duration corresponding to the first DRX, and second target information within the extension time after the first on-duration, wherein
the first target information comprises at least a direct communication request DCR in sidelink direct communication interface signaling PC5-S, and the second target information comprises information other than the first target information in the PC5-S and sidelink direct communication interface radio resource control PC5-RRC information.

32. The apparatus according to claim 30, wherein in a case that the unicast establishment active time comprises the on-duration corresponding to the first DRX, the second establishment module is configured to:
in the unicast sidelink establishment process, transmit PC5-S and PC5-RRC information within at least one on-duration corresponding to the first DRX.

33. The apparatus according to claim 30, wherein after the first sending module sends the unicast service data packet by using the target configuration information after the unicast sidelink establishment is completed, the apparatus further comprises:
a second sending module, configured to send first indication information to the receive end, wherein
the first indication information is used to indicate the receive end to stop using the second DRX.

34. A terminal, wherein the terminal is a receive end and comprises a processor, a memory, and a program or instructions stored in the memory and capable of running on the processor, wherein when the program or instructions are executed by the processor, the steps of the unicast sidelink communication method according to any one of claims 1 to 12 are implemented.

35. A terminal, wherein the terminal is a transmit end and comprises a processor, a memory, and a program or instructions stored in the memory and capable of running on the processor, wherein when the program or instructions are executed by the processor, the steps of the unicast sidelink communication method according to any one of claims 13 to 25 are implemented.

36. A readable storage medium, wherein the readable storage medium stores a program or instructions, and when the program or instructions are executed by a processor, the steps of the unicast sidelink communication method according to any one of claims 1 to 25 are implemented.

37. A chip, comprising a processor and a communication interface, wherein the communication interface is coupled to the processor, and the processor is configured to run a program or instructions to implement the steps of the unicast sidelink communication method according to any one of claims 1 to 25.

38. A computer program product, wherein the computer program product is stored in a non-transitory readable storage medium, and the computer program product is executed by at least one processor to implement the steps of the unicast sidelink communication method according to any one of claims 1 to 25.

39. A communication device, wherein the communication device is configured to perform the steps of the unicast sidelink communication method according to any one of claims 1 to 25.
